# EUROPEAN PATENT SPECIFICATION

(11) **EP 4 310 027 B1**
(45) Date of publication and mention of the grant of the patent: **20.08.2025**
(21) Application number: 23181060.7
(22) Date of filing: 22.06.2023
(51) Int. Cl.: B65B 35/10, B65B 65/02, B65G 54/02, B65G 15/14

(54) **CONVEYING APPARATUS FOR A PACKAGING MACHINE AND PACKAGING MACHINE HAVING A CONVEYING APPARATUS**
FÖRDERVORRICHTUNG FÜR EINE VERPACKUNGSMASCHINE UND VERPACKUNGSMASCHINE MIT EINER FÖRDERVORRICHTUNG
DISPOSITIF DE TRANSPORT POUR UNE MACHINE D'EMBALLAGE ET MACHINE D'EMBALLAGE DOTÉE D'UN DISPOSITIF DE TRANSPORT

(30) Priority: 07.07.2022 EP 22183604
(43) Date of publication of application: 24.01.2024
(73) Proprietor: Tetra Laval Holdings & Finance S.A., 1009 Pully (CH)
(72) Inventor: RICCI, CURBASTRO, Fabio, 41123 Modena (IT); RIMONDI, Fabrizio, 41123 Modena (IT); FLORE, Stefano, 41123 Modena (IT); PICCININI, Giorgio, 41123 Modena (IT); ROSSI, Stefano, 41123 Modena (IT)
(74) Representative: Tetra Pak Patent Attorneys

(56) References cited:
- EP-A1- 3 594 141
- WO-A1-2021/115545
- WO-A2-02/46069
- DE-A1- 102020 120 295
- US-A1- 2015 197 353

## Description

### TECHNICAL FIELD

The present invention relates to a conveyor apparatus for a packaging machine, in particular a conveyor apparatus for advancing packages filled with a pourable product, in particular a pourable food product.

Advantageously, the present invention also relates to a packaging machine for the packaging of pourable products, in particular pourable food products, into packages, in particular packages formed from a multilayer packaging material, and having at least one conveying apparatus.

### BACKGROUND ART

As is known, many liquid or pourable food products, such as fruit juice, UHT (ultra-high-temperature treated) milk, wine, tomato sauce, etc., are sold in packages, in particular sealed packages, made of sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which form and fill the packages starting from a multilayer packaging material. Such automatic packaging machines come along with significant production speeds (more than 10000 packages per hour or even significantly faster).

In the recent years, a desire has evolved in the sector to be able to handle the packages after their formation in a more flexible manner, in particular to transport the packages in a more flexible, and in particular also in a scalable, manner. DE 10 2020 120295 A1 discloses an apparatus according to the preamble of claim 1.

### DISCLOSURE OF INVENTION

It is therefore an object of the present invention to provide an improved conveying apparatus for advancing packages filled with a pourable product, in particular filled with a pourable food product. Preferentially, it is an object of the present invention to provide an improved conveying apparatus for advancing packages formed from a multilayer packaging material and being filled with a pourable product, in particular a pourable food product.

It is another object of the present invention to provide for an improved packaging machine having a conveying apparatus for advancing packages filled with a pourable product, in particular filled with a pourable food product.

According to the present invention, there is provided an conveying apparatus according to the independent claim 1.

Preferred embodiments of the inspection apparatus are claimed in the claims being directly or indirectly dependent on claim 1.

According to the present invention, there is also provided a packaging machine according to claim 12.

### BRIEF DESCRIPTION OF THE DRAWINGS

A non-limiting embodiment of the present invention will be described by way of example with reference to the accompanying drawings, in which:
Figure 1 is a schematic view of a packaging machine having at least one conveying apparatus according to the present invention, with parts removed for clarity;
Figure 2 is a schematic top view of a conveying apparatus according to the present invention, with parts removed for clarity;
Figure 3 is a perspective view of a portion of the conveying apparatus of Figure 2, with parts removed for clarity;
Figure 4 is a perspective view of a detail of the portion of Figure 3, with parts removed for clarity;
Figures 5a and 5b are perspective views of the detail of Figure 4 loaded with a respective package and being in a first configuration and a second configuration, with parts removed for clarity;
Figures 6a to 6c are lateral views of the conveying apparatus of Figure 2 and indicating different steps of operation of the conveying apparatus, with parts removed for clarity; and
Figure 7 is a perspective view of a further detail of the conveying apparatus of Figure 2, with parts removed for clarity.

### BEST MODES FOR CARRYING OUT THE INVENTION

Number 1 indicates as a whole a packaging machine for producing packages 2 filled with a pourable product, in particular a pourable food product, such as (pasteurized) milk, fruit juice, wine, tomato sauce, salt, sugar, emulsions, yoghurt, yoghurt drinks, beverages with pulp, milk drinks etc.

Packaging machine 1 may be configured to produce packages 2 filled with the pourable product.

In more detail, packaging machine 1 may be configured to produce packages 2 from a packaging material having a multilayer configuration; i.e. packaging machine 1 may be configured to product packages 2 from a multilayer packaging material.

In further detail, the packaging material may comprise at least one layer of fibrous material, such as e.g. a paper or cardboard, and at least two layers of heat-seal plastic material, e.g. polyethylene, interposing the layer of fibrous material in between one another. One of these two layers of heat-seal plastic material may define the inner face of package 2 contacting the pourable product.

Moreover, the packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, the packaging material may also comprise a further layer of heat-seal plastic material being interposed between the layer of gas- and light-barrier material and the layer of fibrous material.

In further detail, the packaging material may be provided in the form of a web 3.

Each package 2 obtained by packaging machine 1 may comprise a longitudinal seam portion.

Additionally, each package 2 may also comprise a pair of a respective first transversal sealing band and a respective second transversal sealing band, in particular arranged at opposite sides of package 2. In particular, the first transversal sealing band may define a transversal top sealing band and the second transversal sealing band may define a transversal bottom sealing band.

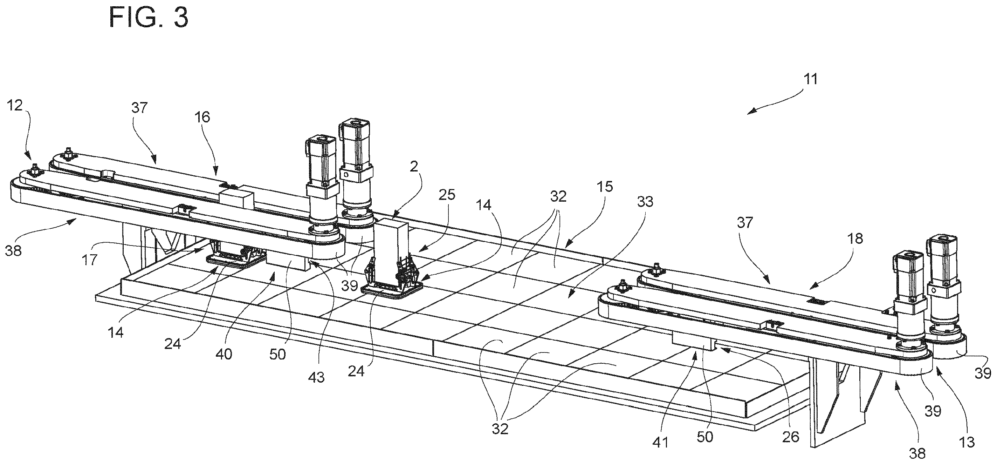

In further detail and with particular reference to Figures 3 and 5a to 6c, each package 2 may comprise a first wall 4, in particular carrying and/or having the first transversal sealing band. Preferably, first wall 4 may define a support surface of package 2, which may be designed to be put in contact with a support, such as e.g. a shelf, when, in use, being e.g. exposed within a sales point or when being stored or when being transported. In particular, when being arranged on the support first wall 4 may define a bottom wall.

Additionally, each package 2 may also comprise a side wall 5 being (fixedly) connected to first wall 4 and may extend from first wall 4. In particular, side wall 5 may carry and/or have at least a portion of the longitudinal seam portion.

Moreover, each package 2 may also comprise a second wall 6 opposed to first wall 4 and being (fixedly) connected to side wall 5. In particular, side wall 5 may be interposed between first wall 4 and second wall 6.

Preferentially, each second wall 6 may carry and/or have the second transversal sealing band.

In particular, when package 2 may be arranged on a support, second wall 6 may define a top wall.

According to the shown non-limiting embodiment, first wall 4 and second wall 6 may be parallel to one another.

According to non-limiting alternative embodiments not shown, first wall 4 and second wall 6 may be inclined with respect to one another. In particular, second wall 6 may define a slanted top or may define a portion of a gable-top.

According to some possible non-limiting embodiments, each package 2 may comprise a second wall 6 being molded onto the respective side wall 5.

In further detail, each package 2 may extend along a longitudinal axis, a first transversal axis and a second transversal axis being perpendicular to one another. Preferentially, an extension of package 2 along the longitudinal axis may be larger than respective extensions along the first transversal axis and the second transversal axis. Preferentially, the respective first walls 4 and the respective second walls 6 may be spaced apart from one another along the longitudinal axis.

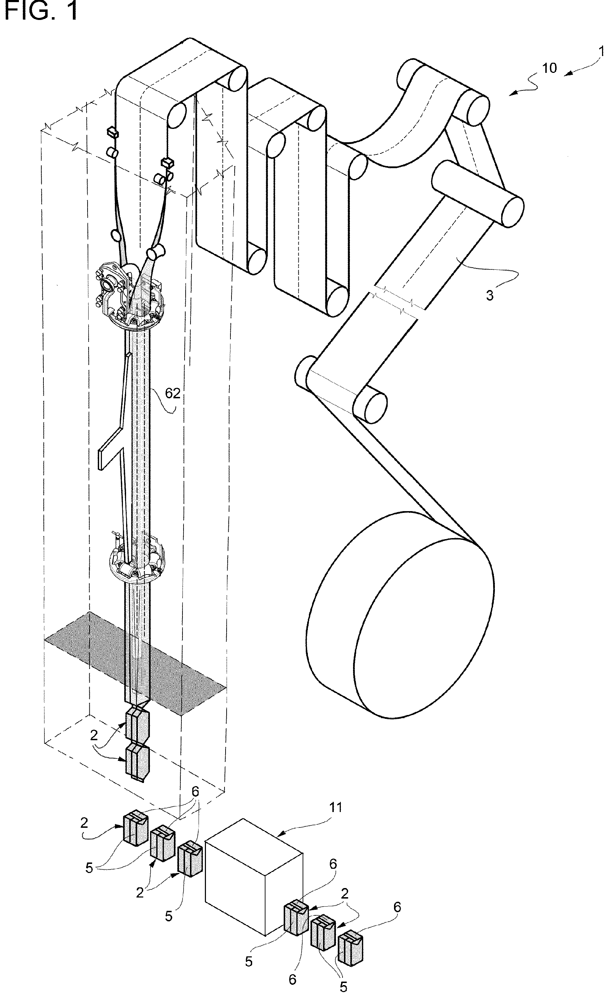

With particular reference to Figure 1, packaging machine 1 may comprise:
- a package filling apparatus 10 for filling packages 2, in particular for forming and filling packages 2, even more particular for forming packages 2 from the multilayer packaging material and filling packages 2; and
- at least one conveyor apparatus 11 for advancing packages 2 from an inlet station 12 to an outlet station 13.

In particular, conveying apparatus 11 may be arranged downstream from package filling apparatus 10; i.e. conveying apparatus 11 receives, in use, packages 2 from package filling apparatus 10.

According to some possible non-limiting embodiments, packaging machine 1 may comprise more than one conveying apparatus 11. Two or more conveying apparatuses 11 may be arranged parallel to one another; i.e. each conveying apparatus 11 may receive, in use, a respective portion of packages 2.

Alternatively or in addition, two or more conveying apparatuses 11 may be arranged in series to one another; i.e. two or more conveying apparatuses 11 advance a plurality of the same packages 2.

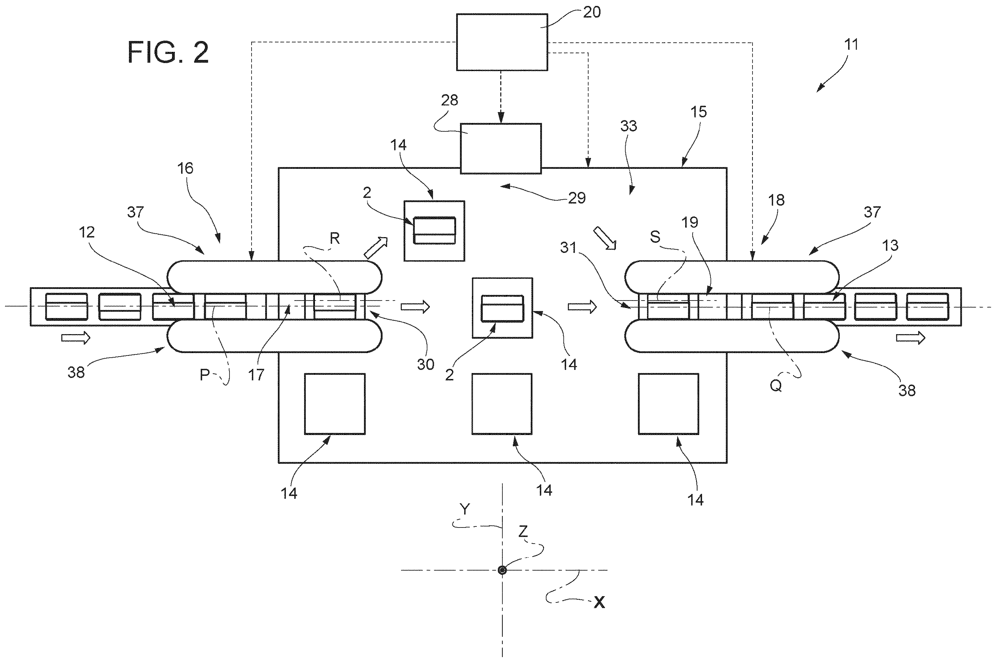

With particular reference to Figures 2 to 7, each conveying apparatus 11 comprises:
- a plurality of carriers 14 each configured to carry at least one, in particular only one, respective package 2 (at a time);
- a planar motor 15 configured to selectively and independently move each one of the carriers 14;
- at least one inlet conveyor 16 configured to advance packages 2 from inlet station 12 to a receiving station 17 at which each package 2 is transferred to a respective carrier 14; and
- at least one outlet conveyor 18 configured to advance packages 2 from a release station 19, at which each package 2 is released from the respective carrier 14, and in particular also transferred from the respective carrier 14 to outlet conveyor 18, to outlet station 13.

Preferentially, each conveying apparatus 11 may also comprise a respective control unit 20 configured to control operation of conveying apparatus 11 itself. In particular, control unit 20 may be configured to control operation of planar motor 15 for controlling advancement of carriers 14.

According to some possible non-limiting embodiments not shown, conveying apparatus 11 may comprise a plurality of inlet conveyors 16 and/or a plurality of outlet conveyors 18. Preferentially, to each inlet conveyor 16 may be associated one respective inlet station 12, and in particular one respective receiving station 17 and/or to each outlet conveyor 18 may be associated one respective outlet station 13, and in particular one respective release station 19.

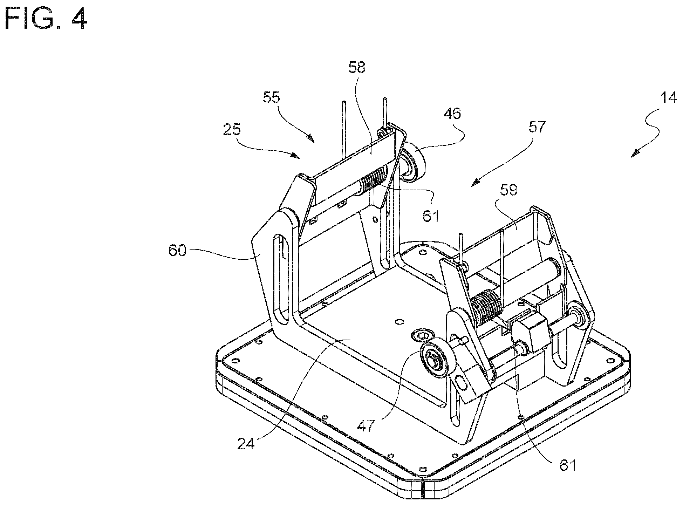

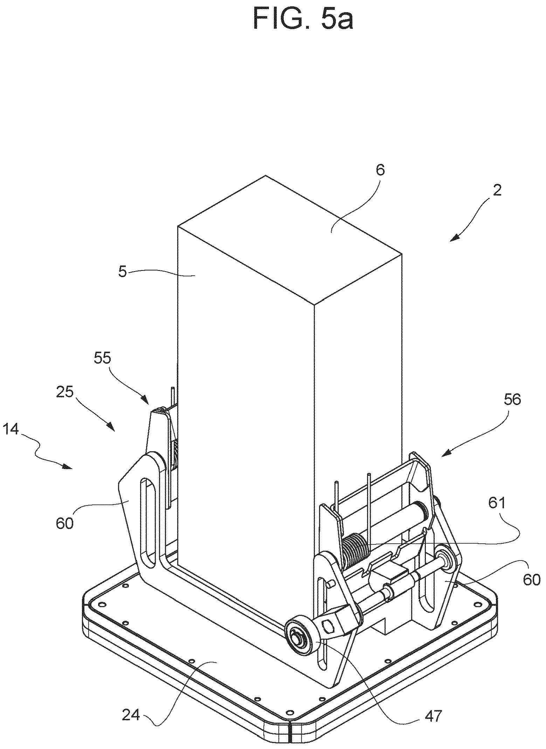

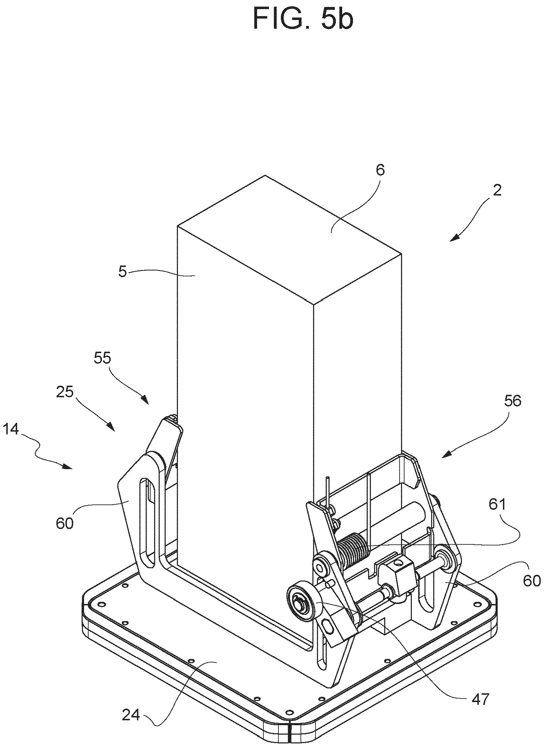

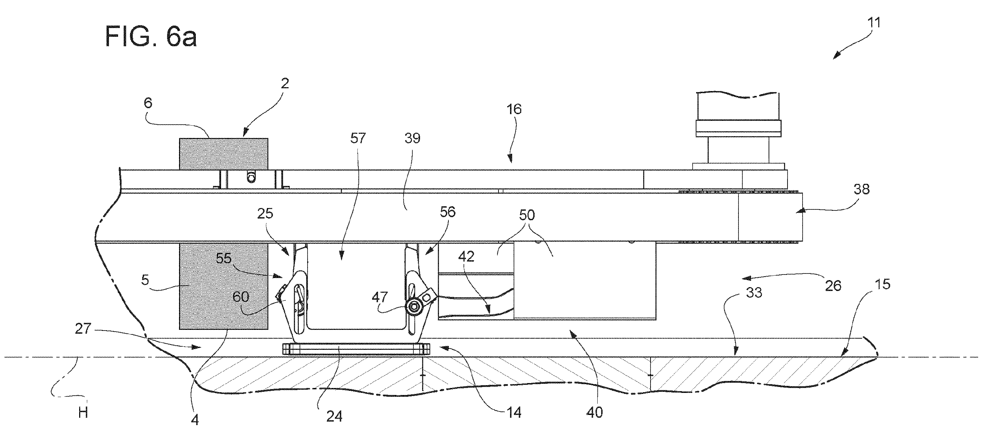

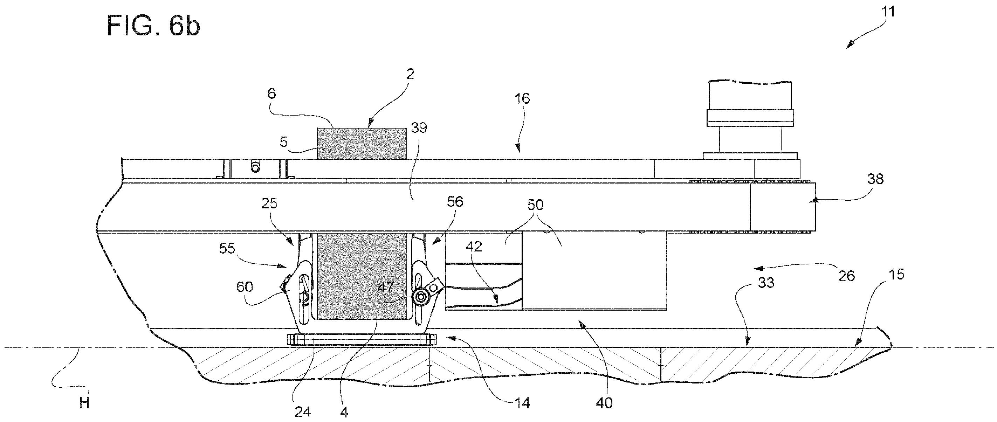

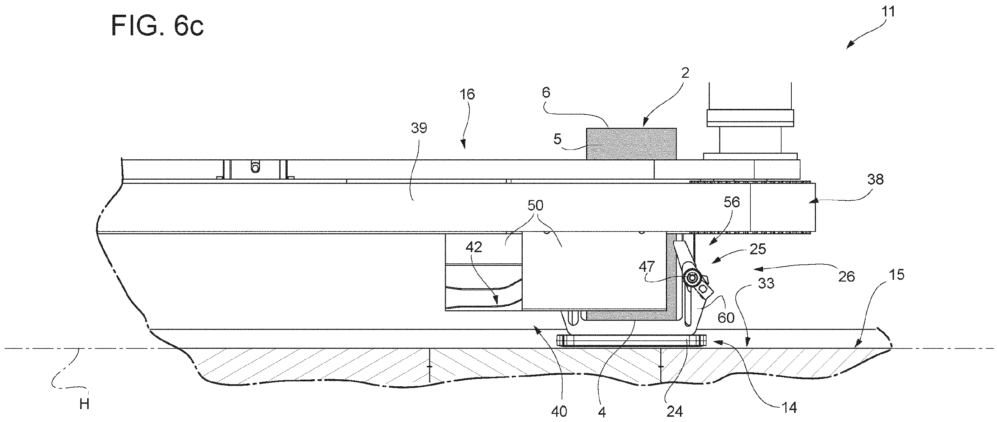

With particular reference to Figures 4 to 6c, each carrier 14 comprises a respective support platform 24 and a retaining device 25 controllable into an open configuration (see Figures 5a, 6a and 6b) at which the respective retaining device 25 allows for receiving or releasing the respective package 2 and a retaining configuration (see Figures 5b and 6c) at which the respective retaining device 25 retains the respective package 2.

Each support platform 24 carries the respective retaining device 25.

Preferentially, each retaining device 25 may be fixed to and/or may extend from the respective support platform 24.

More specifically, in use, package 2 may be arranged on the respective carrier 14, in particular the respective support platform 24, such that the respective longitudinal axis is transversal, in particular perpendicular, to carrier 14, in particular support platform 24. In particular, each first wall 4 may be in contact with support platform 24 when being placed on the respective carrier 14.

In particular, controlling, in use, the respective retaining device 25 into the respective retaining configuration allows advancement of packages 2 by means of advancement of carriers 14 in a safe manner.

Additionally, each conveying apparatus 11 comprises a control device 26 for controlling, in particular for selectively controlling, each retaining device 25 between the respective open configuration into the respective retaining configuration.

In more detail, control device 26 is configured to control, in particular to selectively control, each retaining device 25 from the respective open configuration to the respective retaining configuration after and/or during receiving of a respective package 2 at the receiving station 17 and to control each retaining device 25 from the respective retaining configuration into the respective open configuration prior to and/or during releasing the respective package 2 at the releasing station 19.

In more detail, each inlet conveyor 16 and each outlet conveyor 18 may be configured to advance each package 2 such that each package 2 is, in use spaced apart from planar motor 15 in a manner that a respective interspace 27 between planar motor 15 and packages 2 forms allowing to interpose the respective support platform 24 of a respective package 2 between planar motor 15 and the respective package 2.

In this manner, it is possible to place support platforms 24 between planar motor 15 and packages 2 such to arrange packages 2 onto support platforms 24.

Moreover, planar motor 15 may be configured to synchronize advancement of each carrier 14 with respect to the respective package 2, when, in use, the respective package 2 is advanced by the respective inlet conveyor 16 or the respective outlet conveyor 18.

According to some preferred non-limiting embodiments, planar motor 15 may be configured to advance carriers 14 from inlet conveyor 16 to outlet conveyor 18, in particular when being loaded with a respective package 2. In particular, planar motor 15 may be configured to individually and selectively control advancement of each carrier 14 between inlet conveyor 16 and outlet conveyor 18.

Preferentially, planar motor 15 may also be configured to advance carriers 14 from outlet conveyor 18 to inlet conveyor 16, in particular after releasing the respective package 2 (i.e. when being newly empty).

E.g. conveying apparatus 11 may also comprise one or more treatment and/or measurement and/or analyzing units 28 configured to treat and/or measure and/or analyze packages 2. Each treatment and/or measurement and/or analyzing unit 28 may be arranged at a respective station 29.

Treatment and/or measurement and/or analyzing units 28 may e.g. be configured to inspect a quality of packages 2 and/or to scan packages 2 and/or to apply decorations onto packages 2.

In particular, planar motor 15 may be configured to selectively control advancement of carriers 14 so as e.g. to directly transfer packages 2 from inlet conveyor 16 to outlet conveyor 18 or to transfer packages 2 from inlet conveyor 16 to one or more treatment and/or measurement and/or analyzing units 28 and afterwards to outlet conveyor 18 (i.e. to indirectly transfer packages 2 from inlet conveyor 16 to outlet conveyor 18.

In more detail, each inlet conveyor 16 may be configured to advance packages 2 along an inlet path P, in particular a linear inlet path P.

More specifically, inlet path P may extend between inlet station 12 and an end station 30. In particular, at inlet station 12 and end station 30 packages 2 respectively start to be in contact with and loose contact with inlet conveyor 16.

In further detail, each inlet conveyor 16 may be configured to advance packages 2 at a determined, and in particular constant, first advancement velocity.

In more detail, each outlet conveyor 18 may be configured to advance packages 2 along an outlet path Q, in particular a linear outlet path Q.

More specifically, outlet path Q may extend between a start station 31 and outlet station 13. In particular, at start station 31 and outlet station 13 packages 2 respectively start to be in contact with and loose contact with outlet conveyor 18.

In further detail, each outlet conveyor 18 may be configured to advance packages 2 at a determined, and in particular constant, second advancement velocity.

According to some possible embodiments, first advancement velocity and second advancement velocity may equal one another. According to some other embodiments, first advancement velocity and second advancement velocity may differ; e.g. first advancement velocity may be larger or smaller than second advancement velocity.

As will be explained in more detail further on, planar motor 15 may be configured such to synchronize movement of carriers 14 with respect to inlet conveyor 16 and outlet conveyor 18 during advancement of packages 2 along at least a respective portion of respectively inlet path P and outlet path Q.

With particular reference to Figures 6b to 6c, planar motor 15 may be configured to control advancement of each carrier 14 along a receiving path R, in particular being parallel to a portion of inlet path P. Preferentially, each carrier 14 may advance through receiving station 17 when advancing along receiving path R.

Moreover, planar motor 15 may be configured to control advancement of each carrier 14 along receiving path R at a speed corresponding to the first advancement velocity.

Additionally, while advancing along receiving path R the respective support platform 24 of carrier 14 may be interposed between planar motor 15 and the respective package 2; i.e. support platform 24 may be arranged within interspace 27. In particular, each support platform 24 ma be arranged below the respective package 2.

In this way, it is possible to guarantee that packages 2 can be gently placed on the respective support platforms 24.

With particular reference to Figure 6a, planar motor 15 may be configured to place, in use, carriers 14 adjacent to inlet conveyor 16 prior to advancing carriers 14 along receiving path R.

With particular reference to Figures 5a, 5b, 6b and 6c, control device 26 may be configured to control each retaining device 25 from the respective open configuration to the respective retaining configuration during advancement of the respective carrier 14 along a portion of the receiving path R.

In particular, planar motor 15 may be configured to control advancement of carriers 14 such that control device 26 controls retaining devices 25 from the open configuration to the retaining configuration after receiving the respective packages 2.

In further detail, control device 26 may be configured such to control each retaining device 25 into the retaining configuration, prior to packages 2 reaching end station 30.

Thereby one guarantees that as long as packages 2 are not securely retained by the respective retaining devices 25, packages 2 are still in contact with inlet conveyor 16.

Additionally, planar motor 15 may in an analogous manner (but in reversed order) control advancement of carrier 14 when transferring packages 2 to outlet conveyor 18.

In more detail, planar motor 15 may be configured to control advancement of each carrier 14 along a release path S, in particular being parallel to a portion of outlet path Q. Preferentially, each carrier 14 may advance through release station 19 when advancing along release path Q.

Moreover, planar motor 15 may be configured to control advancement of each carrier 14 along release path S at a speed corresponding to the second advancement velocity.

Additionally, while advancing along release path R the respective support platform 24 of carrier 14 may be interposed between planar motor 15 and the respective package 2; i.e. support platform 24 may be arranged within the respective interspace 27.

This allows to gently remove packages 2 from the respective support platforms 24.

Moreover, control device 26 may be configured to control each retaining device 25 from the respective retaining configuration to the respective open configuration during advancement of the respective carrier 14 along a portion of the release path S.

In particular, planar motor 15 may be configured to control advancement of carriers 14 such that control device 26 controls retaining devices 25 from the retaining configuration to the open configuration prior to releasing the respective packages 2.

In further detail, control device 26 may be configured such to control each retaining device 25 into the open configuration, after packages 2 have been transferred to outlet conveyor 18.

In further detail, planar motor 15 may be configured to selectively control movement of each carrier 14 independently from the other carriers 14. In this context, independently means that planar motor 15 may accelerate and decelerate each carrier 14 in a selective manner, which may differ from any acceleration and deceleration of other carriers 14. Furthermore, planar motor 15 may control movement of each carrier 14 such to avoid any undesired impact with the one or more other carriers 14.

According to some preferred non-limiting embodiments, planar motor 15 may be configured to control each carrier 14 along three linear axes and around three rotational axes. In other words, each carrier 14 comes along with six degrees of freedom.

Even more specifically, planar motor 15 may be configured to control movement of each carrier 14 along a first linear axis X, a second linear axis Y perpendicular to the first linear axis X and a third linear axis Z perpendicular to the first linear axis X and the second linear axis Y. In this way, it is possible to control the position of each carrier 14 (and therewith also of the respective packages 2) in a three-dimensional space.

Moreover, planar motor 15 may be configured to control angular movements of each carrier 14 around a respective first rotation axis, a respective second rotation axis perpendicular to the first rotation axis and a third rotation axis perpendicular to the first rotation axis and the second rotation axis. This allows to control the angular positions of carriers 14 (and therewith also of the respective packages 2).

By providing for six-degrees of freedom, it is possible to precisely control angular and spatial positions of packages 2, e.g. with respect to planar motor 15.

With particular reference to Figure 2, planar motor 15 may also comprise one or more planar control modules 32, in particular being operatively coupled to control unit 20.

Preferentially, each planar control module 32 may comprise a one or more induction coils configured to generate local electromagnetic fields for selectively controlling advancement of carriers 14.

Control unit 20 may be configured to control the plurality of induction coils in order to control movement of carriers 14, in particular along first linear axis X, second linear axis Y and third linear axis Z and around the first rotation axis, the second rotation axis and the third rotation axis.

More specifically, planar motor 15 may be configured to control carriers 14 along third linear axis Z so as to elevate carriers 14 from planar control modules 32. In particular, with the coils being powered off, carriers 14 may be placed on planar control modules 32.

According to some possible embodiments, planar motor 15 may be configured to move each carrier 14 along third linear axis Z and towards the respective package 2 when advancing along at least a portion of receiving path R.

In more detail, planar motor 15 may be configured such to place support platforms 24 below the respective packages 2 and to approach the respective support platforms 24 towards the respective packages 2 by controlling the respective carriers 14 along the respective third linear axis Z and so as to receive the respective packages 2, preferentially with the respective carrier 14 advancing along at least a portion of the receiving path R.

According to some possible embodiments, planar motor 15 may be configured to move each carrier 14 along third linear axis Z and away from the respective package 2 when advancing along at least a portion of releasing path S.

In more detail, planar motor 15 may be configured such to withdraw the respective support platforms 24 from the respective packages 2 by controlling the respective carriers 14 along the respective third linear axis Z and to move the respective support platforms 24 away from the respective packages 2 so as to release the respective packages 2, preferentially with the respective carrier 14 advancing along at least a portion of the releasing path S.

Moreover, each planar control module 32 may extend along a first axis, in particular parallel to first linear axis X, and a second axis, in particular parallel to second linear axis Y.

Advantageously, each carrier 14 may comprise at least one magnetic and/or ferromagnetic element allowing for interaction of each carrier 14 with the local electromagnetic fields generated by the coils.

Preferentially, planar motor 15 may comprise an outer surface 33, in particular a planar outer surface 33, facing carriers 14. In particular, outer surface 33 may lie within a plane H, in particular having a (substantially) horizontal orientation.

In particular, each planar control module 32 may comprise a respective portion of the respective outer surface 33.

According to some possible embodiments, inlet path P and/or outlet path Q may be parallel to planar motor 15, in particular to outer surface 33 and/or plane H.

Alternatively, at least portions of inlet path P and/or outlet path Q may be inclined with respect to planar motor 15, in particular outer surface 33 and/or plane H. According to such embodiments, end station 30 and start station 31 may be closer to plane H than respectively inlet station 12 and outlet station 13. In particular, such a configuration may allow to more gently place and pick packages 2 on and from carriers 14.

With particular reference to Figures 2, 3 and 7, each one of inlet conveyor 16 and outlet conveyor 18 may comprise a respective pair of a first belt conveyor 37 and a second belt conveyor 38, in particular each having a respective belt 39, spaced apart from one another. Each first belt conveyor 37 and the respective second belt conveyor 38 of each pair may configured to interpose and grip packages 2 between one another, in particular between the respective belts 39, and to advance packages 2, in particular by movement of the respective belts 39 along respective endless paths.

In particular, the distance of each pair of first belt conveyor 37 and second belt conveyor 38, in particular between the respective belts 39, may be such to be able to interpose and grip the packages 2 between one another.

It may be possible that the respective distances of first belt conveyor 37 and second belt conveyor 38 of inlet conveyor 16 and outlet conveyor 18 may differ. E.g. planar motor 15 may be configured to modify the orientation of packages 2 by controlling the respective carriers 14 during advancement between inlet conveyor 16 and outlet conveyor 18. In this case, the distance between first belt conveyors 37 and second belt conveyors 38 may be different.

According to some possible embodiments, conveying apparatus 11 may comprise adjustment means for adjusting the distances between first belt conveyors 37 and the respective second belt conveyors 38.

According to some possible embodiments, first belt conveyors 37 and second belt conveyors 38 may be parallel to planar motor 15, in particular to outer surface 33 and/or plane H.

Alternatively, first belt conveyors 37 and second belt conveyors 38 may be inclined with respect to planar motor 15, in particular outer surface 33 and/or plane H in particular such that end station 30 and start station 31 may be closer to plane H than respectively inlet station 12 and outlet station 13.

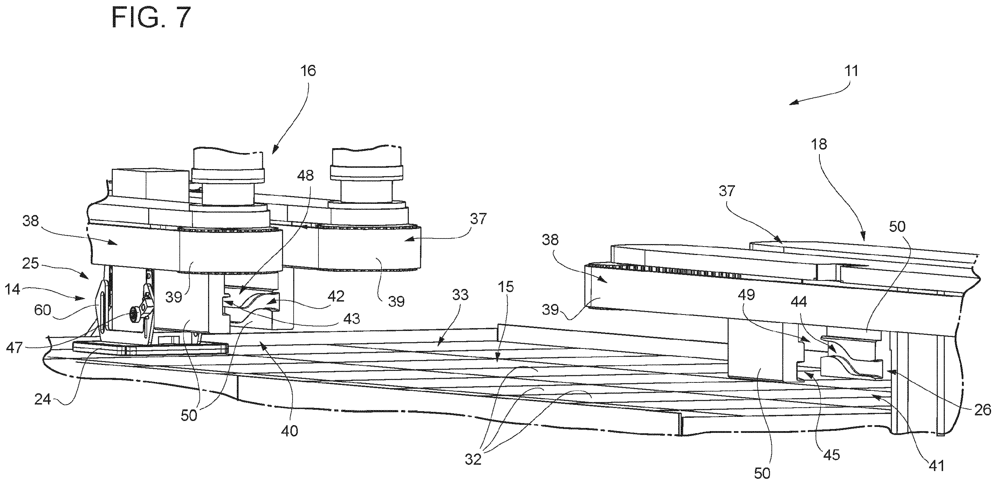

With particular reference to Figures 3 and 7, and according to the invention, control device 26 comprises an inlet cam mechanism 40 configured to control retaining devices 26 from the respective open configurations to the respective retaining configuration and an outlet cam mechanism 41 configured to control retaining devices 26 from the retaining configurations to the open configurations.

In particular, inlet cam mechanism 40 and outlet cam mechanism 41 may be associated to respectively inlet conveyor 16 and outlet conveyor 18.

Preferentially, inlet cam mechanism 40 may be interposed between inlet station 12 and end station 30 and outlet cam mechanism 41 may be interposed between start station 31 and outlet station 13.

According to the specific example embodiment shown, inlet cam mechanism 40 and outlet cam mechanism 41 may be of the mechanical type. Alternatively, inlet cam mechanism 40 and outlet cam mechanism 41 may be of the electronic type.

In more detail, inlet cam mechanism 40 may comprise:
- at least a first inlet cam profile 42, and in particular also a second inlet cam profile 43, associated to inlet conveyor 12;
- at least a first outlet cam profile 44, and in particular a second outlet cam profile 45, associated to outlet conveyor 13; and
- a plurality of first cam followers 46, and in particular a plurality of second cam followers 47, each one being connected to one respective retaining device 25.

In particular, in use, interaction of first cam followers 46, and in particular of second cam followers 47, with first inlet cam profile 42, and in particular second inlet cam profile 43 respectively, allows control of retaining devices 25 from the respective open configurations to the respective retaining configurations. Additionally, in use, interaction of first cam followers 46, and in particular of second cam followers 47, with first outlet cam profile 45, and in particular second inlet cam profile 46 respectively, allows control of retaining devices 25 from the respective retaining configurations to the respective open configurations.

In more detail (see Figure 7), first inlet cam profile 42 and first outlet cam profile 44 may be mirror symmetric with regard to one another.

Additionally, second inlet cam profile 42 and second outlet cam profile 45 may be mirror symmetric with regard to one another.

Preferentially, first inlet cam profile 42 and second inlet cam profile 43 may equal one another. Additionally, first outlet cam profile 44 and second outlet cam profile 45 may equal one another.

In further detail, first inlet cam profile 42 and second inlet cam profile 43 may be spaced apparat from one another, preferentially in a direction transversal, in particular perpendicular, to inlet path P, thereby defining a first advancement space 48 through which, in use, at least a portion of retaining devices 25 may advance, in particular when retaining devices 25 are moved from the open configuration to the retaining configuration.

Additionally, first outlet cam profile 45 and second outlet cam profile 46 may be spaced apparat from one another, preferentially in a direction transversal, in particular perpendicular, to outlet path Q, thereby defining a second advancement space 49 through which, in use, at least a portion of retaining devices 25 may advance, in particular when retaining devices 25 are moved from the retaining configuration to the open configuration.

Preferentially, first inlet cam profile 42 and second inlet cam profile 43 may be staggered with respect to one another such that each first cam follower 46 and the respective second cam follower 47 start to interact with respective first inlet cam profile 42 and second inlet cam profile 43 at the same moment. In an analogous manner, also first outlet cam profile 44 and second outlet cam profile 45 may be staggered with respect to one another so that each first cam follower 46 and the respective second cam follower 47 start to interact with respectively first outlet cam profile 44 and second outlet cam profile 45 at the same moment.

According to some preferred non-limiting embodiments, each one of first inlet cam profile 42 and first outlet cam profile 44, and in particular also second inlet cam profile 43 and second outlet cam profile 45, may be S-shaped.

According to the specific non-limiting embodiment shown and with particular reference to Figures 6a to 7, each one of first inlet cam profile 42, second inlet cam profile 43, first outlet cam profile 44 and second outlet cam profile 45 may be formed as respective grooves within respective plates 50. In particular, each groove being substantially S-shaped.

Alternatively, each one of first inlet cam profile 42, second inlet cam profile 43, first outlet cam profile 44 and second outlet cam profile 45 could e.g. be formed by a bar (e.g. being formed into an S-shape) or the like.

With particular reference to Figures 3 to 5b, each retaining device 25 may comprise a first retaining assembly 55 and a second retaining assembly 56 spaced apart from one another, in particular defining thereby an housing space 57 for the respective package 2.

Preferentially, each first retaining assembly 55 and the respective second retaining assembly 56 may be configured to engage the respective package 2 from opposite sides thereof with the respective retaining device 25 being controlled into the respective retaining configuration. Moreover, each first retaining assembly 55 and the respective second retaining assembly 56 may be spaced away in such a manner to allow for placing within and removing the respective package 2 from the respective housing space 57.

According to the embodiment shown, each first retaining assembly 55 and the respective second retaining assembly 56 may be at least partially moveable for controlling the respective retaining device 25 between the respective open configuration and the respective retaining configuration.

Alternatively, it may also be possible that only one of each first retaining assembly 55 and the respective second retaining assembly 56 may be at least partially moveable.

In more detail, each first retaining assembly 55 may comprise a first engagement portion 58 controllable into a retracted position and an engaged position at which the respective first engagement portion 58 is configured to be respectively retracted from and engaged to the respective package 2.

Preferentially, also each second retaining assembly 56 may comprise a respective second engagement portion 59 controllable into a retracted position and an engaged position at which the respective second engagement portion 58 is configured to be respectively retracted from and engaged to the respective package 2.

Moreover, with the respective retaining device 25 being controlled into the respective open configuration and into the respective retaining configuration, the respective first engagement portion 58 and/or the respective second engagement portion 59 may be respectively in the respective retracted position and the respective engaged position.

According to some preferred non-limiting embodiments, each first cam follower 46 and each second cam follower 47 may be connected to, in particular carrier by, respectively one respective first retaining assembly 55 and one respective second retaining assembly 56.

In further detail, each first cam follower 46 may be configured to interact with first inlet cam profile 42 for controlling the respective first engagement portion 58 from the respective retracted position to the respective engagement position and to interact with first outlet cam profile 44 for controlling the respective first engagement portion 58 from the respective engaged position to the respective retracted position.

In an analogous manner, each second cam follower 47 may be configured to interact with second inlet cam profile 43 for controlling the respective second engagement portion 59 from the respective retracted position to the respective engagement position and to interact with second outlet cam profile 45 for controlling the respective second engagement portion 59 from the respective engaged position to the respective retracted position.

In further detail and with particular reference to Figures 4 to 5c, each first retaining assembly 55 and each second retaining assembly 55 may comprise a respective support structure 60 moveably carrying respectively the respective first engagement portion 58 and the respective second engagement portion 59.

In particular, each first engagement portion 58 and each second engagement portion 59 may be connected to the respective support structure 60 in a manner to be angular moveable around a respective rotation axis. Movement of each first engagement portion 58 and each second engagement portion 59 between the respective retracted position and the engaged position is obtained by angularly moving the respective engagement portion 58 and the respective second engagement portion 59 about the respective rotation axis.

Preferentially, each first engagement portion 58 and each second engagement portion 59 may comprise spring elements 61 such that first engagement portion 58 and second engagement portion 59 remain in the engaged position and the retraced position in the absence of an intervention of control device 26. In particular, control device 26 is configured to exert forces, which allow to counteract the forces exerted by spring elements 62.

With particular reference to Figure 1, package filling apparatus 10 may be configured to produce packages 2 and to fill packages 2 with the pourable product.

In more detail, package filling apparatus 10 may be configured to produce packages 2 by forming a tube 62 from web 3, longitudinally sealing tube 62, filling tube 62 with the pourable product and to transversally seal and cut tube 62.

In use, packaging machine 1 produces packages 2 filled with the pourable product.

In particular, package filling apparatus 10 forms packages 2, delivers packages 2 to conveying apparatus 11 and conveying apparatus 11 advances packages 2 from inlet station 12 to outlet station 13.

In more detail, package filling apparatus 10 forms tube 62 from web 3, longitudinally seals tube 62 and shapes, transversally seals and transversally cuts tube 62 so as to obtain packages 2.

During operation of conveying apparatus 11, inlet conveyor 16 advances packages 2 along inlet path P, in particular from inlet station 12 to and/or towards end station 30.

During advancement of each package 2 along inlet station 12 one respective carrier 14 is approached, in particular by control through planar motor 15, such that the respective support platform 24 is interposed between the respective package 2 while the respective retaining device 25 is in the respective open configuration. Afterwards, the respective retaining device 25 is controlled by control device 26, in particular inlet cam mechanism 40, into the respective retaining configuration. The latter occurs, while the respective carrier 14 advances along the respective receiving path R.

Once, the respective retaining device 25 is controlled into the respective retaining configuration, the respective package 2 can be detached from inlet conveyor 16. Preferentially, while the respective carrier 14 advances along a portion of receiving path R, package 2 is in contact with the respective carrier 14 and with inlet conveyor 16, and in particular after the package 2 receives end station 30, package 2 loses contact with inlet conveyor 16 and is further on solely advanced by advancement of the respective carrier 14.

Preferentially, prior to controlling the respective retaining device 25 into the respective retaining configuration, the respective carrier 14 is moved by planar motor 15 along the third linear axis Z and towards the respective package 2, preferentially so as to bring the respective package 2 into contact with the respective support platform 24.

Moreover, carrier 14 continues to advance so as to transfer the respective package 2 to outlet conveyor 18. Carrier 14 may directly or indirectly (e.g. at first to station 29) advance the respective package 2 to outlet conveyor 18.

Each package 2 enters in contact with outlet conveyor 18 at start station 31, while still being also in contact with the respective carrier 14.

While the respective carrier 14 advances along release path S, control device 26, in particular outlet cam mechanism 41, controls the respective retaining device 25 from the respective retaining configuration to the respective open configuration. Afterwards, the carrier 14 is withdrawn from the respective package 2, which is then solely advanced by outlet conveyor 18 to outlet station 13.

Preferentially, after controlling the respective retaining device 25 into the respective open configuration, the respective carrier 14 is moved by planar motor 15 along the third linear axis Z and away from the respective package 2.

The advantages of conveying apparatus 11 and/or of packaging machine 1 according to the present invention will be clear from the foregoing description.

In particular, conveying apparatus 11 allows in a flexible manner to advance packages 2.

Moreover, conveying apparatus 11 allows for a flexible and scalable handling of packages 2 downstream from package filling apparatus 10.

Additionally, conveying apparatus 11 can handle packages 2 of different format without the need of any time-consuming modifications.

Clearly, changes may be made to conveying apparatus 11 and/or packaging machine 1 and/or carrier 14 as described herein without, however, departing from the scope of protection as defined in the accompanying claims.

According to some possible embodiments not shown, each carrier 14 may comprise a first carrier portion and a second carrier portion. Preferentially, each first carrier portion and the respective second carrier portion are moveable independently from one another.

Each first carrier portion and each second carrier portion comprises and/or define a respective section of the corresponding support platform 24.

Moreover, planar motor 15 may be configured to control advancement of each first carrier portion and the respective second carrier portion such to control the respective retaining device 25 between the open configuration and the retaining configuration by controlling the relative position between each first carrier portion and the respective second carrier portion. Preferentially, planar motor 15 may be advance each first carrier portion and the respective second carrier portion independently from one another, but still in a coordinated manner, such that each first carrier portion and the respective second carrier portion can receive, advance and release the respective packages 2.

Additionally, each first carrier portion and each second carrier portion may carry respectively the respective first retaining assembly 55 and the respective second retaining assembly 56.

Furthermore, each retaining device 25 can be controlled into the respective retaining configuration by approaching the respective first carrier portion and the respective second carrier portion towards one another and can be controlled into the respective open configuration by withdrawing the respective first carrier portion and the respective second carrier portion from one another.

In further detail, each first carrier portion and each second carrier portion may comprise at least one magnetic and/or ferromagnetic element allowing for interaction with the local electromagnetic fields generated by the coils.

According to the instant disclosure, one or more embodiments refers to a conveying apparatus (11) for advancing packages (2) filled with a pourable product from an inlet station (12) to an outlet station (13) comprising:
- a plurality of carriers (14), each one configured to carry at least one package (2) and each having a respective retaining device (25) and a support platform (24) carrying the retaining device (25); wherein the retaining device (25) is controllable into an open configuration at which the retaining device (25) allows for receiving or releasing the respective package (2) and a retaining configuration at which the respective retaining device (25) retains the respective package (2);
- a planar motor (15) configured to selectively and independently move each one of the carriers (14); and
- a control device (26) for controlling each retaining device (25) from the respective open configuration into the respective retaining configuration after and/or during receiving a respective package (2), e.g. at the inlet station (12) or at the receiving station (17), and to control each retaining device (25) from the respective retaining configuration into the respective open configuration prior to and/or during releasing the respective package (2), e.g. at the outlet station (13) or at the releasing station (19).

In particular, an interspace (27) may be present between the planar motor (15) and the package (2) at the inlet station that may allow to interpose the respective support platform (24) between the planar motor (15) and the respective package (2).

The conveying apparatus (11) may comprise:
- an inlet conveyor (16) configured to advance the packages (2) from the inlet station (12) to and/or through a receiving station (17) at which each package (2) is transferred onto a respective carrier (14);
- an outlet conveyor (18) configured to advance the packages (2) at least from a release station (19), at which each package (2) is released from the respective carrier (2) to the outlet station (13).

The inlet conveyor (16) and the outlet conveyor (18) are configured to advance each package (2) in a manner spaced apart from the planar motor (15) and such that a respective interspace (27) between the planar motor (15) and the package (2) allows of interposing the respective support platform (24) between the planar motor (15) and the respective package (2).

The inlet conveyor (16) may be configured to advance each package (2) at a determined first advancement velocity and along an inlet path (P).

The planar motor (15) may be configured to control advancement of each carrier (14) along a receiving path (R) at a speed corresponding to the first advancement velocity.

Each carrier (14) may advance through the receiving station (17) when advancing along the receiving path (R).

The receiving path (R) may be parallel to a portion of the inlet path (P) and while advancing along the receiving path (R) the respective support platform (24) may be interposed between the planar motor (15) and the respective package (2).

The control device (26) may be configured to control each retaining device (25) from the respective open configuration to the respective retaining configuration during advancement of the respective carrier (14) along at least a portion of the receiving path (R).

The outlet conveyor (18) may be configured to advance each package (2) at a determined second advancement velocity and along an outlet path (Q).

The planar motor (15) may be configured to control advancement of each carrier (14) along a release path (S) at a speed corresponding to the second advancement velocity.

Each carrier (14) may advance through the release station (19) when advancing along the release path (S).

The release path (R) may be parallel to at least a portion of the outlet path (Q) and while advancing along the release path (S) the respective support platform (14) is interposed between the planar motor (15) and the respective package (2).

The control device (26) may be configured to control each retaining device (25) from the respective retaining configuration to the respective open configuration during advancement of the respective carrier (14) along at least a portion of the release path (S).

The planar motor (15) may be configured to synchronize advancement of each carrier (14) with respect to the respective package (2), when, in use, the respective package (2) is advanced by the respective inlet conveyor (16) or the respective outlet conveyor (18).

The control device (26) may comprise at least an inlet cam mechanism (40) associated to the inlet conveyor (16) and at least an outlet cam mechanism (41) associated to the outlet conveyor (18).

The inlet cam mechanism (40) and the outlet cam mechanism (41) may be configured to control the retaining devices (25) from respectively the open configuration to the retaining configuration and from the retaining configuration to the open configuration.

The inlet cam mechanism (40) may comprise at least an inlet cam profile (42, 43) and the outlet cam mechanism (41) may comprise at least an outlet cam profile (44, 45).

The inlet cam profile (42, 43) and the outlet cam profile (44, 45) may be mirror symmetric with regard to one another.

Each retaining device (25) may comprise a first retaining assembly (55) and a second retaining assembly (56). The first retaining assembly (55) and the second retaining assembly (56) may be configured to engage the respective package (2) from opposite sides thereof with the retaining device (25) being controlled into the respective retaining configuration.

Each first retaining assembly (55) may comprise a first engagement portion (58) controllable into a retracted position and an engaged position at which the first engagement portion (58)is configured to be respectively retracted from and engaged to the respective package (2).

With the respective retaining device (25) being controlled into the respective open configuration and into the respective retaining configuration the respective first engagement portion (58) may be respectively in the respective retracted position and the respective engaged position.

Each second retaining assembly (56) may comprise a second engagement portion (59) controllable into a retracted position and an engaged position at which the second engagement portion (59) is configured to be respectively retracted from and engaged to the respective package (2). With the respective retaining device (25) being controlled into the respective open configuration and into the respective retaining configuration the respective second engagement portion (59) may be respectively in the respective retracted position and the respective engaged position.

The control device (26) may comprise:
- a first inlet cam profile (42) and a second inlet cam profile (43) associated to the inlet conveyor (16) and spaced apart from one another thereby defining a first advancement space (48) for at least a portion of the retaining devices (25); and
- a first outlet cam profile (44) and a second outlet cam profile (45) associated to the outlet conveyor (18) and spaced apart from one another thereby defining a second advancement space (49) for at least a portion of the retaining devices (25).

The retaining device (25) may comprise a plurality of first cam followers (46), each one carried by one respective first retaining assembly (55) and a plurality of second cam followers (47), each one carried by one respective second retaining assembly (56). The first cam followers (46) may be configured to interact with the first inlet cam profile (42) for controlling the respective first engagement portion (58) from the respective retracted position to the respective engagement position and to interact with the first outlet cam profile (44) for controlling the respective first engagement portion (58) from the respective engaged position to the respective retracted position. The second cam followers (47) may be configured to interact with the second inlet cam profile (43) for controlling the respective second engagement portion (59) from the respective retracted position to the respective engagement position and to interact with the second outlet cam profile (45) for controlling the respective second engagement portion (59) from the respective engaged position to the respective retracted position.

Each one of the inlet conveyor (16) and the outlet conveyor (18) may comprise a respective pair of a first belt conveyor (37) and a second belt conveyor (38) spaced apart from one another. The respective first belt conveyor (37) and the respective second belt conveyor (38) of each pair may be configured to interpose and grip the packages (2) between one another and to advance the packages (2) in cooperation within one another.

One or more embodiments relates to a packaging machine (1) for producing packages (2) filled with a pourable product comprising:
- a package filling apparatus (10) for filling the packages (2) with the pourable product; and
- at least one conveying apparatus (11) according to the previous description.

One or more embodiments relates to a carrier (14) for a conveying apparatus (11) for advancing packages (2) filled with a pourable product according to the previous description; the conveying apparatus (11) having a planar motor (15) configured to selectively advance the carrier (14). The carrier (14) comprises a support platform (24) for supporting a package (2) and a retaining device (25) controllable into an open configuration at which the retaining device (25) allows for receiving or releasing the respective package (2) and a retaining configuration at which the respective retaining device (25) retains the respective package (2);
wherein each retaining device (25) comprises a first retaining assembly (55) and second retaining assembly (56) spaced apart from one another defining a housing space (57) for the respective package (2);
wherein the first retaining assembly (55) and the second retaining assembly (56) are configured to engage the respective package (2) from opposite sides thereof with the retaining device (25) being controlled into the respective retaining configuration.

Each first retaining assembly (55) may comprise a first engagement portion (58) controllable into a retracted position and an engaged position at which the first engagement portion (58) is configured to be respectively retracted from and engaged to the respective package (2); wherein with the respective retaining device (25) being controlled into the respective open configuration and into the respective retaining configuration the respective first engagement portion (58) is respectively in the respective retracted position and the respective engaged position.

Each second retaining assembly (56) may comprise a second engagement portion (59) controllable into a retracted position and an engaged position at which the second engagement portion (59) is configured to be respectively retracted from and engaged to the respective package (2); wherein with the respective retaining device (25) being controlled into the respective open configuration and into the respective retaining configuration the respective second engagement portion (59) is respectively in the respective retracted position and the respective engaged position.

Each first retaining assembly (55) may comprise a respective first cam follower (46) configured to interact with a cam profile (42, 44) for controlling the first retaining assembly (55) between the retracted position and the engaged position.

Each second retaining assembly (56) may comprise a respective second cam follower (47) configured to interact with a cam profile (43, 45) for controlling the second retaining assembly (56) between the retracted position and the engaged position.

## Claims

1. Conveying apparatus (11) for advancing packages (2) filled with a pourable product from an inlet station (12) to an outlet station (13) comprising:
- a plurality of carriers (14), each one configured to carry at least one package (2) and each having a respective retaining device (25) and a support platform (24) carrying the retaining device (25); wherein the retaining device (25) is controllable into an open configuration at which the retaining device (25) allows for receiving or releasing the respective package (2) and a retaining configuration at which the respective retaining device (25) retains the respective package (2);
- a planar motor (15) configured to selectively and independently move each one of the carriers (14); and
- a control device (26) for controlling each retaining device (25) from the respective open configuration into the respective retaining configuration after and/or during receiving a respective package (2) and to control each retaining device (25) from the respective retaining configuration into the respective open configuration prior to and/or during releasing the respective package (2),
**characterized in that** the control device (26) comprises at least an inlet cam mechanism (40) and at least an outlet cam mechanism (41);
wherein the inlet cam mechanism (40) and the outlet cam mechanism (41) are configured to control the retaining devices (25) from respectively the open configuration to the retaining configuration and from the retaining configuration to the open configuration.

2. Conveying apparatus according to claim 1, comprising:
- an inlet conveyor (16) configured to advance the packages (2) from the inlet station (12) to and/or through a receiving station (17) at which each package (2) is transferred onto a respective carrier (14);
- an outlet conveyor (18) configured to advance the packages (2) at least from a release station (19), at which each package (2) is released from the respective carrier (2) to the outlet station (13),
wherein the control device (26) is configured for controlling each retaining device (25) from the respective open configuration into the respective retaining configuration after and/or during receiving a respective package (2) at the receiving station (17) and from the respective retaining configuration into the respective open configuration prior to and/or during releasing the respective package (2) at the releasing station (19),
wherein the inlet conveyor (16) and the outlet conveyor (18) are configured to advance each package (2) in a manner spaced apart from the planar motor (15) and such that a respective interspace (27) between the planar motor (15) and the package (2) allows of interposing the respective support platform (24) between the planar motor (15) and the respective package (2).

3. Conveying apparatus according to claim 1 or claim 2, wherein each package (2) advances at a determined first advancement velocity and along an inlet path (P);
wherein the planar motor (15) is configured to control advancement of each carrier (14) along a receiving path (R) at a speed corresponding to the first advancement velocity;
wherein the control device (26) is configured to control each retaining device (25) from the respective open configuration to the respective retaining configuration during advancement of the respective carrier (14) along at least a portion of the receiving path (R).

4. Conveying apparatus according to claim 3, wherein:
- each carrier (14) advances through a receiving station (17) when advancing along the receiving path (R); and/or
- the receiving path (R) is parallel to a portion of the inlet path (P) and while advancing along the receiving path (R) the respective support platform (24) is interposed between the planar motor (15) and the respective package (2).

5. Conveying apparatus according to any of the previous claims, wherein each package (2) advances at a determined second advancement velocity and along an outlet path (Q);
wherein the planar motor (15) is configured to control advancement of each carrier (14) along a release path (S) at a speed corresponding to the second advancement velocity; and
wherein the control device (26) is configured to control each retaining device (25) from the respective retaining configuration to the respective open configuration during advancement of the respective carrier (14) along at least a portion of the release path (S).

6. Conveying apparatus according to claim 5, wherein:
- each carrier (14) advances through a release station (19) when advancing along the release path (S); and/or
- the release path (R) is parallel to at least a portion of the outlet path (Q) and while advancing along the release path (S) the respective support platform (14) is interposed between the planar motor (15) and the respective package (2).

7. Conveying apparatus according to any of the previous claims, wherein the inlet cam mechanism (40) comprises at least an inlet cam profile (42, 43) and the outlet cam mechanism (41) comprises at least an outlet cam profile (44, 45);
wherein the inlet cam profile (42, 43) and the outlet cam profile (44, 45) are mirror symmetric with regard to one another.

8. Conveying apparatus according to claim 7, wherein the retaining device (25) comprises at least one cam follower (46, 47) configured to interact with the at least one inlet cam profile (42, 43) at the inlet station (12) and with the at least one outlet cam profile (44, 45) at the outlet station (12).

9. Conveying apparatus according to any one of the preceding claims, wherein each retaining device (25) comprises a first retaining assembly (55) and a second retaining assembly (56);
wherein the first retaining assembly (55) and the second retaining assembly (56) are configured to engage the respective package (2) from opposite sides thereof with the retaining device (25) being controlled into the respective retaining configuration.

10. Conveying apparatus according to any of the previous claims, wherein the control device (26) comprises:
- a first inlet cam profile (42) and a second inlet cam profile (43) spaced apart from one another thereby defining a first advancement space (48) for at least a portion of the retaining devices (25); and
- a first outlet cam profile (44) and a second outlet cam profile (45) spaced apart from one another thereby defining a second advancement space (49) for at least a portion of the retaining devices (25); and
wherein the retaining device (25) comprises a plurality of first cam followers (46) and a plurality of second cam followers (47)
wherein the first (46) and second (47) cam followers are configured to interact with the first inlet cam profile (42) and the second inlet cam profile (43) at the inlet station (12) and with the first outlet cam profile (44) and the second outlet cam profile (45) at the outlet station (12).

11. Conveying apparatus according to claim 9 and claim 10, wherein the first cam followers (46) are configured to interact with the first inlet cam profile (42) and the first outlet cam profile (44) for controlling a movement of the first retaining assembly (55)
wherein the second cam follower (47) is configured to interact with the second inlet cam profile (43) and the second outlet cam profile (45) for controlling a movement of the second retaining assembly (56).

12. Packaging machine (1) for producing packages (2) filled with a pourable product comprising:
- a package filling apparatus (10) for filling the packages (2) with the pourable product; and
- at least one conveying apparatus (11) according to any one of the preceding claims.

## Patentansprüche

1. Fördereinrichtung (11) zum Vorschieben von Verpackungen (2), die mit einem gießfähigen Produkt gefüllt sind, von einer Einlassstation (12) zu einer Auslassstation (13), umfassend:
- mehrere Träger (14), von denen jeder dazu ausgelegt ist, mindestens eine Verpackung (2) zu tragen, und die jeweils eine jeweilige Haltevorrichtung (25) und eine Stützplattform (24), die die Haltevorrichtung (25) trägt, aufweisen; wobei die Haltevorrichtung (25) in eine offene Auslegung, bei der die Haltevorrichtung (25) ein Aufnehmen oder Freigeben der jeweiligen Verpackung (2) ermöglicht, und eine Halteauslegung, bei der die jeweilige Haltevorrichtung (25) die jeweilige Verpackung (2) hält, steuerbar ist;
- einen Planarmotor (15), der dazu ausgelegt ist, jeden der Träger (14) selektiv und unabhängig zu bewegen; und
- eine Steuervorrichtung (26) zum Steuern jeder Haltevorrichtung (25) von der jeweiligen offenen Auslegung in die jeweilige Halteauslegung nach und/oder während eines Aufnehmens einer jeweiligen Verpackung (2) und zum Steuern jeder Haltevorrichtung (25) von der jeweiligen Halteauslegung in die jeweilige offene Auslegung vor und/oder während eines Freigebens der jeweiligen Verpackung (2),
**dadurch gekennzeichnet, dass**
die Steuervorrichtung (26) mindestens einen Einlassnockenmechanismus (40) und mindestens einen Auslassnockenmechanismus (41) umfasst;
wobei der Einlassnockenmechanismus (40) und der Auslassnockenmechanismus (41) dazu ausgelegt sind, die Haltevorrichtungen (25) von der jeweiligen offenen Auslegung zu der Halteauslegung und von der Halteauslegung zu der offenen Auslegung zu steuern.

2. Fördereinrichtung nach Anspruch 1, die Folgendes umfasst:
- einen Einlassförderer (16), der dazu ausgelegt ist, die Verpackungen (2) von der Einlassstation (12) zu einer und/oder durch eine Aufnahmestation (17), an der jede Verpackung (2) auf einen jeweiligen Träger (14) überführt wird, vorzuschieben;
- einen Auslassförderer (18), der dazu ausgelegt ist, die Verpackungen (2) zumindest von einer Freigabestation (19), an der jede Packung (2) von dem jeweiligen Träger (2) freigegeben wird, zu der Auslassstation (13) vorzuschieben,
wobei die Steuervorrichtung (26) zum Steuern jeder Haltevorrichtung (25) von der jeweiligen offenen Auslegung in die jeweilige Halteauslegung nach und/oder während eines Aufnehmens einer jeweiligen Verpackung (2) an der Aufnahmestation (17) und von der jeweiligen Halteauslegung in die jeweilige offene Auslegung vor und/oder während eines Freigebens der jeweiligen Verpackung (2) an der Freigabestation (19) ausgelegt ist, wobei der Einlassförderer (16) und der Auslassförderer (18) dazu ausgelegt sind, jede Verpackung (2) auf eine von dem Planarmotor (15) beabstandete Weise und derart vorzuschieben, dass ein jeweiliger Zwischenraum (27) zwischen dem Planarmotor (15) und der Verpackung (2) ein Anordnen der jeweiligen Stützplattform (24) zwischen dem Planarmotor (15) und der jeweiligen Verpackung (2) ermöglicht.

3. Fördereinrichtung nach Anspruch 1 oder Anspruch 2, wobei sich jede Verpackung (2) mit einer bestimmten ersten Vorschubgeschwindigkeit und entlang eines Einlasspfads (P) vorschiebt;
wobei der Planarmotor (15) dazu ausgelegt ist, einen Vorschub jedes Trägers (14) entlang eines Aufnahmepfads (R) mit einer Geschwindigkeit zu steuern, die der ersten Vorschubgeschwindigkeit entspricht;
wobei die Steuervorrichtung (26) dazu ausgelegt ist, jede Haltevorrichtung (25) während eines Vorschubs des jeweiligen Trägers (14) entlang zumindest eines Abschnitts des Aufnahmepfads (R) von der jeweiligen offenen Auslegung zu der jeweiligen Halteauslegung zu steuern.

4. Fördereinrichtung nach Anspruch 3, wobei:
- sich jeder Träger (14) durch eine Aufnahmestation (17) vorschiebt, wenn er sich entlang des Aufnahmepfads (R) vorschiebt; und/oder
- der Aufnahmepfad (R) parallel zu einem Abschnitt des Einlasspfads (P) ist und während eines Vorschiebens entlang des Aufnahmepfads (R) die jeweilige Stützplattform (24) zwischen dem Planarmotor (15) und der jeweiligen Verpackung (2) angeordnet wird.

5. Fördereinrichtung nach einem der vorhergehenden Ansprüche, wobei sich jede Verpackung (2) mit einer bestimmten zweiten Vorschubgeschwindigkeit und entlang eines Auslasspfads (Q) vorschiebt;
wobei der Planarmotor (15) dazu ausgelegt ist, einen Vorschub jedes Trägers (14) entlang eines Freigabepfads (S) mit einer Geschwindigkeit zu steuern, die der zweiten Vorschubgeschwindigkeit entspricht; und
wobei die Steuervorrichtung (26) dazu ausgelegt ist, jede Haltevorrichtung (25) während eines Vorschubs des jeweiligen Trägers (14) entlang zumindest eines Abschnitts des Freigabepfads (S) von der jeweiligen Halteauslegung zu der jeweiligen offene Auslegung zu steuern.

6. Fördereinrichtung nach Anspruch 5, wobei:
- sich jeder Träger (14) durch eine Freigabestation (19) vorschiebt, wenn er sich entlang des Freigabepfads (S) vorschiebt; und/oder
- der Freigabepfad (R) parallel zu zumindest einem Abschnitt des Auslasspfads (Q) ist und während eines Vorschiebens entlang des Freigabepfads (S) die jeweilige Stützplattform (14) zwischen dem Planarmotor (15) und dem jeweiligen Gehäuse (2) angeordnet wird.

7. Fördereinrichtung nach einem der vorhergehenden Ansprüche, wobei der Einlassnockenmechanismus (40) mindestens ein Einlassnockenprofil (42, 43) umfasst und der Auslassnockenmechanismus (41) mindestens ein Auslassnockenprofil (44, 45) umfasst;
wobei das Einlassnockenprofil (42, 43) und das Auslassnockenprofil (44, 45) spiegelsymmetrisch zueinander sind.

8. Fördereinrichtung nach Anspruch 7, wobei die Haltevorrichtung (25) mindestens einen Nockenfolger (46, 47) umfasst, der dazu ausgelegt ist, mit dem mindestens einen Einlassnockenprofil (42, 43) an der Einlassstation (12) und mit dem mindestens einen Auslassnockenprofil (44, 45) an der Auslassstation (12) zusammenzuwirken.

9. Fördereinrichtung nach einem der vorhergehenden Ansprüche, wobei jede Haltevorrichtung (25) eine erste Halteanordnung (55) und eine zweite Halteanordnung (56) umfasst;
wobei die erste Halteanordnung (55) und die zweite Halteanordnung (56) dazu ausgelegt sind, die jeweilige Verpackung (2) von gegenüberliegenden Seiten davon in Eingriff zu nehmen, wobei die Haltevorrichtung (25) in die jeweilige Halteauslegung gesteuert wird.

10. Fördereinrichtung nach einem der vorhergehenden Ansprüche, wobei die Steuervorrichtung (26) Folgendes umfasst:
- ein erstes Einlassnockenprofil (42) und ein zweites Einlassnockenprofil (43), die voneinander beabstandet sind, wodurch ein erster Vorschubraum (48) für zumindest einen Abschnitt der Haltevorrichtungen (25) definiert wird; und
- ein erstes Auslassnockenprofil (44) und ein zweites Auslassnockenprofil (45), die voneinander beabstandet sind, wodurch ein zweiter Vorschubraum (49) für zumindest einen Abschnitt der Haltevorrichtungen (25) definiert wird; und
wobei die Haltevorrichtung (25) mehrere erste Nockenfolger (46) und mehrere zweite Nockenfolger (47) umfasst
wobei die ersten (46) und die zweiten (47) Nockenfolger dazu ausgelegt sind, mit dem ersten Einlassnockenprofil (42) und dem zweiten Einlassnockenprofil (43) an der Einlassstation (12) und mit dem ersten Auslassnockenprofil (44) und dem zweiten Auslassnockenprofil (45) an der Auslassstation (12) zusammenzuwirken.

11. Fördereinrichtung nach Anspruch 9 und Anspruch 10, wobei die ersten Nockenfolger (46) dazu ausgelegt sind, mit dem ersten Einlassnockenprofil (42) und dem ersten Auslassnockenprofil (44) zum Steuern einer Bewegung der ersten Halteanordnung (55) zusammenzuwirken
wobei der zweite Nockenfolger (47) dazu ausgelegt ist, mit dem zweiten Einlassnockenprofil (43) und dem zweiten Auslassnockenprofil (45) zum Steuern einer Bewegung der zweiten Halteanordnung (56) zusammenzuwirken.

12. Verpackungsmaschine (1) zum Herstellen von Verpackungen (2), die mit einem gießfähigen Produkt gefüllt sind, umfassend:
- eine Verpackungsfülleinrichtung (10) zum Füllen der Verpackungen (2) mit dem gießfähigen Produkt; und
- mindestens eine Fördereinrichtung (11) nach einem der vorhergehenden Ansprüche.

## Revendications

1. Dispositif de transport (11) destiné à faire avancer des emballages (2) remplis d'un produit fluide d'un poste d'entrée (12) à un poste de sortie (13) comprenant :
- une pluralité de supports (14), chacun étant conçu pour porter au moins un emballage (2) et chacun présentant un dispositif de retenue (25) respectif et une plate-forme de support (24) portant le dispositif de retenue (25) ; le dispositif de retenue (25) étant réglable dans une configuration ouverte dans laquelle le dispositif de retenue (25) permet de recevoir ou de libérer l'emballage (2) respectif et dans une configuration de retenue dans laquelle le dispositif de retenue (25) respectif retient l'emballage (2) respectif ;
- un moteur plat (15) conçu pour déplacer sélectivement et indépendamment chacun des supports (14) ; et
- un dispositif de commande (26) pour commander chaque dispositif de retenue (25) de la configuration ouverte respective à la configuration de retenue respective après et/ou pendant la réception d'un emballage (2) respectif et pour commander chaque dispositif de retenue (25) de la configuration de retenue respective à la configuration ouverte respective avant et/ou pendant la libération de l'emballage (2) respectif,
**caractérisé en ce que**
le dispositif de commande (26) comprend au moins un mécanisme de came d'entrée (40) et au moins un mécanisme de came de sortie (41) ;
le mécanisme de came **d'entrée** (40) et le mécanisme de came de sortie (41) étant conçus pour commander les dispositifs de retenue (25) respectivement de la configuration ouverte à la configuration de retenue et de la configuration de retenue à la configuration ouverte.

2. Dispositif de transport selon la revendication 1, comprenant :
- un convoyeur d'entrée (16) conçu pour faire avancer les emballages (2) du poste d'entrée (12) vers et/ou à travers un poste de réception (17) au niveau duquel chaque emballage (2) est transféré sur un support (14) respectif ;
- un convoyeur de sortie (18) conçu pour faire avancer les emballages (2) au moins à partir d'un poste de libération (19), au niveau duquel chaque emballage (2) est libéré du support (2) respectif vers le poste de sortie (13),
le dispositif de commande (26) étant conçu pour commander chaque dispositif de retenue (25) de la configuration ouverte respective à la configuration de retenue respective après et/ou pendant la réception d'un emballage (2) respectif au poste de réception (17) et de la configuration de retenue respective à la configuration ouverte respective avant et/ou pendant la libération de l'emballage (2) respectif au poste de libération (19), le convoyeur d'entrée (16) et le convoyeur de sortie (18) étant conçus pour faire avancer chaque emballage (2) d'une manière espacée à partir du moteur plat (15) et de sorte qu'un espace intermédiaire (27) respectif entre le moteur plat (15) et l'emballage (2) permette d'insérer la plate-forme de support (24) respective entre le moteur plat (15) et l'emballage (2) respectif.

3. Dispositif de transport selon la revendication 1 ou la revendication 2, chaque emballage (2) avançant à une première vitesse d'avancement définie et le long d'un trajet d'entrée (P) ;
le moteur plat (15) étant conçu pour commander l'avancement de chaque support (14) le long d'un trajet de réception (R) à une vitesse correspondant à la première vitesse d'avancement ;
le dispositif de commande (26) étant conçu pour commander chaque dispositif de retenue (25) de la configuration ouverte respective à la configuration de retenue respective pendant l'avancement du support (14) respectif le long d'au moins une partie du trajet de réception (R).

4. Dispositif de transport selon la revendication 3,
- chaque support (14) avançant à travers un poste de réception (17) lorsqu'il avance le long du trajet de réception (R) ; et/ou
- le trajet de réception (R) étant parallèle à une partie du trajet **d'entrée** (P) et, tout en avançant le long du trajet de réception (R), la plate-forme de support (24) respective étant insérée entre le moteur plat (15) et l'emballage (2) respectif.

5. Dispositif de transport selon l'une quelconque des revendications précédentes, chaque emballage (2) avançant à une seconde vitesse d'avancement définie et le long d'un trajet de sortie (Q) ;
le moteur plat (15) étant conçu pour commander l'avancement de chaque support (14) le long d'un trajet de libération (S) à une vitesse correspondant à la seconde vitesse d'avancement ; et
le dispositif de commande (26) étant conçu pour commander chaque dispositif de retenue (25) de la configuration de retenue respective à la configuration ouverte respective pendant l'avancement du support (14) respectif le long d'au moins une partie du trajet de libération (S).

6. Dispositif de transport selon la revendication 5,
- chaque support (14) avançant à travers un poste de libération (19) lorsqu'il avance le long du trajet de libération (S) ; et/ou
- le trajet de libération (R) étant parallèle à au moins une partie du trajet de sortie (Q) et, tout en avançant le long du trajet de libération (S), la plate-forme de support (14) respective étant insérée entre le moteur plat (15) et l'emballage (2) respectif.

7. Dispositif de transport selon l'une quelconque des revendications précédentes, le mécanisme de came d'entrée (40) comprenant au moins un profil de came d'entrée (42, 43) et le mécanisme de came de sortie (41) comprenant au moins un profil de came de sortie (44, 45) ;
le profil de came d'entrée (42, 43) et le profil de came de sortie (44, 45) étant symétriques en miroir l'un par rapport à l'autre.

8. Dispositif de transport selon la revendication 7, le dispositif de retenue (25) comprenant au moins un galet suiveur (46, 47) conçu pour interagir avec l'au moins un profil de came d'entrée (42, 43) au niveau du poste d'entrée (12) et avec l'au moins un profil de came de sortie (44, 45) au niveau du poste de sortie (12).

9. Dispositif de transport selon l'une quelconque des revendications précédentes, chaque dispositif de retenue (25) comprenant un premier ensemble de retenue (55) et un second ensemble de retenue (56) ;
le premier ensemble de retenue (55) et le second ensemble de retenue (56) étant conçus pour venir en prise avec l'emballage (2) respectif à partir de côtés opposés de celui-ci, le dispositif de retenue (25) étant commandé dans la configuration de retenue respective.

10. Dispositif de transport selon l'une quelconque des revendications précédentes, le dispositif de commande (26) comprenant :
- un premier profil de came d'entrée (42) et un second profil de came d'entrée (43) espacés l'un de l'autre, définissant ainsi un premier espace d'avancement (48) pour au moins une partie des dispositifs de retenue (25) ; et
- un premier profil de came de sortie (44) et un second profil de came de sortie (45) espacés l'un de l'autre, définissant ainsi un second espace d'avancement (49) pour au moins une partie des dispositifs de retenue (25) ; et le dispositif de retenue (25) comprenant une pluralité de premiers galets suiveurs (46) et une pluralité de seconds galets suiveurs (47)
les premiers (46) et seconds (47) galets suiveurs étant conçus pour interagir avec le premier profil de came d'entrée (42) et le second profil de came d'entrée (43) au niveau du poste d'entrée (12) et avec le premier profil de came de sortie (44) et le second profil de came de sortie (45) au niveau du poste de sortie (12).

11. Dispositif de transport selon la revendication 9 et la revendication 10, les premiers galets suiveurs (46) étant conçus pour interagir avec le premier profil de came d'entrée (42) et le premier profil de came de sortie (44) pour commander un mouvement du premier ensemble de retenue (55)
le second galet suiveur (47) étant conçu pour interagir avec le second profil de came d'entrée (43) et le second profil de came de sortie (45) pour commander un mouvement du second ensemble de retenue (56).

12. Machine d'emballage (1) pour la fabrication d'emballages (2) remplis d'un produit fluide comprenant :
- un dispositif de remplissage d'emballage (10) pour remplir les emballages (2) avec le produit fluide ; et
- au moins un dispositif de transport (11) selon l'une quelconque des revendications précédentes.
